# EUROPEAN PATENT APPLICATION

(11) **EP 4 729 423 A1**
(43) Date of publication of application: **22.04.2026**
(21) Application number: 25201880.9
(22) Date of filing: 12.09.2025
(51) Int. Cl.: B64G 7/00

(54) **GRAVITY OFFLOADER SYSTEM AND METHOD FOR SPACE EQUIPMENT DEPLOYMENT**

(30) Priority: 15.10.2024 US 202463707491 P
(71) Applicant: MacDonald, Dettwiler and Associates Corporation, Ste-Anne-de-Bellevue, QC H9X 3R2 (CA)
(72) Inventor: Bianchini, Marco Antonio, Sainte-Anne-de-Bellevue, Quebec, H9X 3R2 (CA); Perey, Richard, Sainte-Anne-de-Bellevue, Quebec, H9X 3R2 (CA); Cateysson, Frederic, Sainte-Anne-de-Bellevue, Quebec, H9X 3R2 (CA)
(74) Representative: Grünecker Patent- und Rechtsanwälte PartG mbB

(57) **Abstract**

A gravity offloader system (100) and method for deployable space equipment is provided herein. The system includes an upper beam (112) and a lower beam (110); an interlevel bridge connecting the upper and lower beams; a lifting sling (105) for hanging a flight mass being tested from the lower beam; a crane bridge for hanging the upper beam from a crane (150) configured to lift the upper beam, the lower beam, and the flight mass; upper beam primary counterweight (134) and lower beam primary counterweight (118); and lower (120) and upper (136) beam flex counterweight systems coupled to the lower and upper beams at their respective pivot points.

## Description

### Technical Field

The following relates generally to ground testing of deployable space equipment, and more particularly to a gravity offloader system for ground testing of deployable space equipment such as antennas.

### Introduction

In the field of spacecraft development, testing the deployment of spacecraft appendages such as antennas is an important step in ensuring mission success. Testing the deployment of spacecraft appendages involves simulating the zero-gravity conditions of space, where these components are designed to function. However, conducting such tests in Earth's 1G environment poses significant challenges, as the weight of these appendages can impede their deployment mechanisms. Traditionally, the aerospace industry has relied on helium-filled balloons to offset this weight, creating a simulated zero-gravity environment for testing. Yet, with the increasing scarcity and cost of helium, coupled with its prioritized use in medical applications, alternative solutions are necessary. This necessity has driven the development of innovative gravity offload systems, designed to replicate the weightless conditions of space without the use of helium, thereby enabling more efficient and sustainable testing of spacecraft antenna deployment on the ground.

Accordingly, there is a need for an improved system and method for ground testing deployable space equipment that overcomes at least some of the disadvantages of existing systems and methods.

### Summary

The system and method described herein provides capabilities for ground testing that overcome at least some of the disadvantages of existing systems and methods. The system and method relate to a multi-point suspension system that enables a flight mass, generally of a large weight, to be weightlessly suspended freely on one end of a beam as if floating in a 0G environment, such as outer space. During testing of the flight mass, the weightless suspension enables the system to move the heavy flight mass with a small motor.

The flight mass suspends freely due to a counterweight system further described herein. The counterweight system applies a pull force on the beam at an end opposing the end on the beam where the flight mass is suspended. The system includes a deflection compensation mechanism to compensate for material deformations of the beam under stress of the flight mass and the opposing counterweight system. The system includes a two-level system enabling the flight mass to move in 3-dimensional space for testing complex movements following a curved path, rather than simpler movements following a linear or planar path. The two-level system further enables smaller displacements of the flight mass that occur during testing to be compensated, to further control for parameters affecting the simulation of the 0G environment.

A gravity offloader system is provided. The gravity offloader system may be used for ground testing deployable space equipment. The gravity offloader system includes: an upper beam and a lower beam; an interlevel bridge comprising a first end and a second end for hanging the lower beam from the upper beam, the first end connecting to the lower beam at a lower level pivot point, the second end coupling to the upper beam, wherein the first end and the second end are connected by an interlevel sling; a lifting sling for hanging a flight mass being tested from the lower beam; a crane bridge for hanging the upper beam from a crane configured to lift the upper beam, the lower beam, and the flight mass, the crane bridge connecting to the upper beam at an upper level pivot point, wherein the crane bridge and the crane are connected by a crane sling; an upper beam primary counterweight coupled to the upper beam on a first side of the upper level pivot point that is opposite a second side of the upper level pivot point on which interlevel bridge is coupled; a lower beam primary counterweight coupled to the lower beam on a first side of the lower level pivot point that is opposite a second side of the lower level pivot point on which the lifting sling is coupled; a lower beam flex counterweight system coupled to the lower beam at the lower level pivot point; and an upper beam flex counterweight system coupled to upper beam at the upper level pivot point.

In an embodiment, the system further includes at least one sliding counterweight coupled to the lower beam and configured to slide along the lower beam to increase or decrease distance from the lower level pivot point.

In an embodiment, the at least one sliding counterweight includes a first sliding counterweight and a second sliding counterweight coupled to the lower beam on opposing sides of the lower level pivot point.

In an embodiment, the system further includes at least one sliding counterweight coupled to the upper beam and configured to slide along the upper beam to increase or decrease distance from the upper level pivot point.

In an embodiment, the system further includes a beam angle limiting mechanism at the lower level pivot point or the upper level pivot point to limit movement of the lower beam or the upper beam.

In an embodiment, the system further includes a load cell coupled at a first end to the lifting sling and coupled at a second end to a pickup point for attaching the flight mass.

In an embodiment, the lower beam counterweight is coupled to the lower beam at a distance from the lower level pivot point such that the weight and inertia of the gravity offloader system is optimized.

In an embodiment, the upper beam counterweight is coupled to the upper beam at a distance from the upper level pivot point such that the weight and inertia of the gravity offloader system is optimized.

A method of using the gravity offloader system is also provided. The method includes: attaching a mass equal to the flight mass to the pickup point; balancing the lower beam using the lower beam primary counterweight and the lower beam flex counterweight system while the mass is attached; connecting the upper beam to the balanced lower beam using the interlevel bridge; balancing the upper beam primary counterweight and the upper beam flex counterweight system while the upper beam is connected to the balanced lower beam; applying a retaining device to the balanced upper and lower beams to keep the balanced upper and lower beams in a balanced configuration when the mass is removed; replacing the mass with the flight mass at the pickup point; removing the retaining device; and testing deployment of the flight mass.

In an embodiment, the gravity offloader system further includes at least one sliding counterweight coupled to the lower beam or the upper beam, and the method further includes adjusting a position of the at least one sliding counterweight along the lower beam or upper beam while the flight mass is attached to balance the gravity offloader system.

In an embodiment, balancing the lower beam includes moving a weight of the lower beam flex counterweight system closer to the lower beam or further away from the lower beam to move a center of gravity of the lower beam closer to the lower level pivot point.

In an embodiment, balancing the upper beam includes moving a weight of the upper beam flex counterweight system closer to the upper beam or further away from the upper beam to move a center of gravity of the upper beam closer to the upper level pivot point.

In an embodiment, the method further includes monitoring a lifting force applied to the flight mass using a load cell, wherein the load cell is coupled at a first end to the lifting sling and coupled at a second end to a pickup point for attaching the flight mass.

In an embodiment, balancing the lower beam includes removing pins at a lower beam angle limiting mechanism, attaching a mass representing the flight mass at the pickup point, and lifting the lower beam while the mass is attached.

In an embodiment, balancing the lower beam further includes inserting the pins at the lower beam angle limiting mechanism and facing the lower beam at the horizontal position.

In an embodiment, balancing the upper beam includes inserting pins at an upper beam angle limiting mechanism at a 0 degree angle relative to a horizontal position, lifting the upper beam with the crane, and connecting the lower beam to the upper beam.

In an embodiment, the method further includes coupling the lower beam counterweight to the lower beam at a distance from the lower level pivot point such that the weight and inertia of the gravity offloader system is optimized.

In an embodiment, the method further includes coupling the upper beam counterweight to the upper beam at a distance from the upper level pivot point such that the weight and inertia of the gravity offloader system is optimized.

In an embodiment, balancing the lower beam includes moving the weight of the lower beam flex counterweight system away from the lower beam if the lower beam moves towards a horizontal position, and balancing the lower beam includes moving the weight of the lower beam flex counterweight system closer to the lower beam if the lower beam moves towards a vertical position.

In an embodiment, balancing the upper beam includes moving the weight of the upper beam flex counterweight system away from the upper beam if the upper beam moves towards a horizontal position, and balancing the upper beam further includes moving the weight of the upper beam flex counterweight system closer to the upper beam if the upper beam moves towards a vertical position.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a block diagram of a gravity offloader system, according to an embodiment;
Figure 2 is a perspective view schematic diagram of a gravity offloader system, according to an embodiment;
Figure 3 is a flow diagram of a method of using the gravity offloader system of Figure 1, according to an embodiment; and
Figure 4 is a flow diagram of a method of using the gravity offloader system of Figure 1, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

The following relates generally to ground testing of deployable spacecraft components, and more particularly to a gravity offloader system for ground testing of deployable space equipment such as antennas.

The gravity offloader system of the present disclosure is a flexible device that can be used in various and limited environments. The gravity offloader includes a two level design that allows for more complex multi-direction deployments.

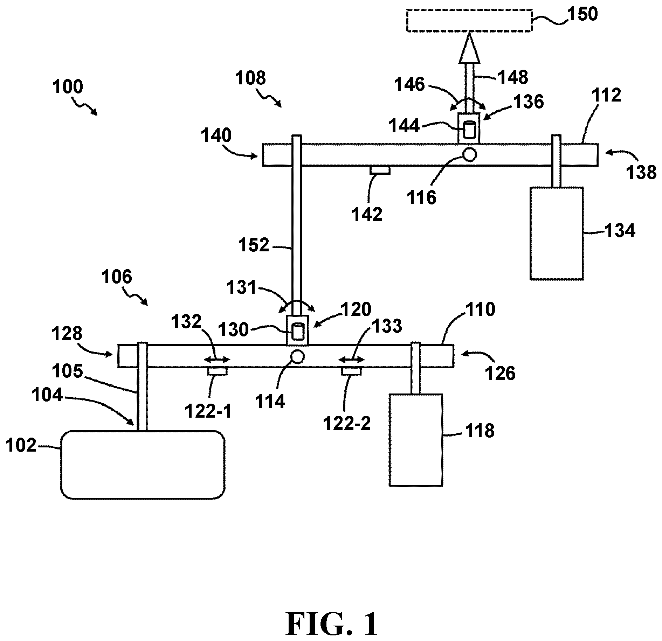

Referring now to Figure 1, shown therein is a gravity offloader system 100 for ground testing deployable space equipment, according to an embodiment.

The deployable space equipment may be, for example, an antenna, a robotic arm, or a scientific instrument. The deployable space equipment or mechanism may use a motor configured to deploy the mechanism in 0G and that cannot move in 1G (i.e., on ground during testing).

In the context of the system 100, and throughout the present disclosure, the deployable space equipment is referred to as a "flight mass".

In general, the gravity offloader system 100 is configured to exert a pull force on a flight mass attached to a pickup point of the system 100 to offload the weight of the flight mass and enable simulation of flight mass deployment in 0G.

The amount of pull force exerted by the gravity offloader system 100 can be adjusted by adjusting the distance between a set of pivot points (such as pivot points 114, 116, described below) and their respective primary counterweights (such as counterweights 118, 134, described below), attached on a beam (such as beam 110, 112, described below).

The amount of pull force exerted by the system 100 can be further adjusted by adding or removing weight from the counterweights to have more or less pull force.

As noted, the system 100 can be used to test deployment of a flight mass 102. The flight mass 102 is a deployable space equipment. To test flight mass 102, the flight mass 102 is attached to the system 100 at pickup point 104. The specific weight of the flight mass 102 needs to be known so that that the system 100 can be configured to apply a pull force that is equal to the weight of the flight mass 102.

The system 100 includes a lower level 106 and an upper level 108 for balancing the flight mass 102. Lower level 106 includes a lower beam 110. Upper level 108 includes an upper beam 112. The upper level 108 and lower level 106 enable testing of complex movements of the flight mass 102 in deployment including movements in 3-dimensional space.

The movements in 3-dimensional space of the flight mass 102 in deployment enabled by the 2-level design of the system 100 may be described by a curve (along the horizontal x, y, and vertical z directions), rather than movement described by a line (along one of the horizontal x or y directions) or by a plane (along the horizontal x and y directions). This includes tiny displacements during operation of system 100 of the lower level 106 that are compensated for by the upper level 108.

In order for the system 100 to lift the flight mass 102, the flight mass 102 is balanced around a lower pivot point 114 and an upper pivot point 116 in lower and upper levels 106, 108, respectively.

The lower level 106 of the system 100 is configured to balance the flight mass 102 such that the collective center of gravity of all masses applying a force on lower beam 110 is at lower pivot point 114.

The flight mass 102 is connected to the lower beam 110 (and thus system 100) by a lifting sling 105 such that the flight mass 102 hangs freely below the lower beam 110. The lifting sling 105 is used to transfer the pull force applied by system 100 to the flight mass 102. The lifting sling 105 is connected to the lower beam 110 such that the lifting sling 105 can pivot relative to the beam 110.

The lower level 106 includes a lower level counterweight system. The lower level counterweight system is configured to position the center of gravity of the masses applying a force on lower beam 110 at lower pivot point 114.

The lower level counterweight system includes primary counterweight 118, flex counterweight system 120 (also referred to herein as deflection compensation system or feature), and sliding counterweights 122-1, 122-2. In some embodiments, a single sliding counterweight, either sliding counterweight 122-1 or 122-2, may be used on the lower level 106, depending on the flight mass 102 and configuration of counterweight 118. In some embodiments, no sliding counterweights may be used on the lower level 106 Using two sliding counterweights as in system 100 may provide greater flexibility. Sliding counterweights 122-1, 122-2 may be referred to collectively as sliding counterweights 122 and generically as sliding counterweight 122.

The primary counterweight 118 is coupled to the lower beam 110 at or near a first end 126 of the lower beam 110 that is opposite a second end 128 at or near which the lifting sling 105 is located.

The amount of the primary counterweight 118 is determined prior to initial configuration of the system 100 and is based on the flight mass 102. The amount of primary counterweight 118 may be determined using a mathematical algorithm or computer program. In one embodiment, an Excel spreadsheet or the like may be used to determine primary counterweight 118. The primary counterweight 118 may include one or more weight elements (e.g., weight plates). In an embodiment, the primary counterweight 118 includes a plurality of weight plates that can be easily added to or removed from the beam 110 in order to adjust the amount of the counterweight 118. In a particular embodiment, the weight plates may be standard gym weights (e.g., 45 pound plates).

The flex counterweight system 120 is coupled to the lower beam 110 at the lower pivot point 114. The flex counterweight system 120 is configured to compensate for flex in the beam 110 that may be induced by forces as a result of flight mass 102 and primary counterweight 118. The flex in the beam 110 could otherwise cause the center of gravity to shift from the lower pivot point 114 (i.e., the center of gravity would be lower than the lower pivot point 114). The flex counterweight system 120 is configured to pull the center of gravity of the flex in the beam 110 to the lower pivot point 114, thereby compensating for beam flex. The flex in the beam 110 may change according to the angle of beam 110. Where the angle of beam 110 is such that beam 110 is parallel to the ground, the flex in the beam 110 is maximum. The flex in the beam 110 varies such that the flex decreases as the angle of the beam 110 increases or decreases.

The flex counterweight system 120 includes one or more weight elements 130 (e.g., weight plates). The amount of weight in the flex counterweight system 120 may be adjusted by adding or removing one or more flex weight elements 130. In an embodiment, the weight elements 130 are disposed on a rod or similar component that extends perpendicular to the beam 110 and along which the weight elements 130 can move (i.e., further from beam 110 and closer to beam 110, depending on the configuration of the system 100). The flex counterweight system 130 is fixed to the beam 110 such that the flex counterweight system 130 moves in direction 131 as the angle of the beam 110 changes (i.e., remains perpendicular to the beam 110). The flex in the beam 110 determines the amount of flex counterweight system 130. The amount of flex in the beam 110 is determined by the weight of the flight mass 102. A higher weight flight mass 102 requires higher primary counterweight 118 to balance the flight mass 102, resulting in high amount of flex in the beam 110.

During calibration of lower level 106, the flex weight elements 130 are adjusted such that the lower beam 110 may balance a mass representing flight mass 102 and counterweight 118 when suspended. The flex weight elements 130 are selected depending on the amount of flex in the lower beam 110. The flex weight elements 130 may not be included where there is negligible amount of flex in the lower beam 110. The flex weight elements 130 are disposed along the rod with a clearance distance along the length of the rod above and below the position of flex weight elements 130. The clearance distance above the flex weight elements 130 enables flex weight elements 130 to be adjusted to compensate for imbalance of the lower beam 110 in one direction of change of the angle of lower beam 110. The clearance distance below the flex weight elements 130 provides analogous function in the opposite direction of the change of the angle of lower beam 110. The flex weight elements 130 are generally positioned centrally along the length of the rod. The position of flex weight elements 130 are manually adjusted based on the direction and amount of change of the angle of lower beam 110. The flex weight elements 130 are generally a few grams in weight which allow sensitive adjustments to the centre of gravity of the lower level 106. The sensitive adjustments enable the flex counterweight system 120 to compensate for the error between theoretical calculations of the configuration of lower level 106 and the actual configuration during calibration of lower level 106.

The sliding counterweights 122 are coupled to beam 110. Sliding counterweight 122-1 is positioned on the beam 110 between the lifting sling 105 and the lower pivot point 114. Sliding counterweight 122-2 is positioned on the beam 110 between the lower pivot point 114 and the primary counterweight 118.

Sliding counterweights 122 are slidingly coupled to the beam 110 such that the horizontal position of the sliding counterweight 122 along the length of the beam 110 can be adjusted. The sliding counterweight 122 may include a locking feature that locks to fix the sliding counterweight 122 in position and unlocks to enable sliding of the sliding counterweight 122 along the beam 110 in directions 132, 133 to adjust position.

The sliding counterweights 122are used to provide micro-adjustments on the pull force applied by the system 100. The horizontal position of the sliding counterweights 122 along the beam 110 may be adjusted during testing of the flight mass.

In an embodiment, sliding counterweight 122 may include a handle to loosen the sliding counterweight 122 and enable moving the sliding counterweight 122 to a new position along the beam 110. The handle couples the sliding counterweight 122 to the beam 110 such that sliding counterweight 122 may be adjusted as the system 100 is deployed in the air. The amount of the lower counterweight system may be adjusted by adjusting the position of either the sliding counterweight 122-1 or the sliding counterweight 122-2 in same manner. Specifically, for a given distance away from the lower pivot point 114 at which sliding counterweight 122-1 is positioned, the sliding counterweight 122-1 exerts a torque on the beam 110 around the lower pivot point 114 of a magnitude that is the same (but opposite in direction) as the torque on the beam 110 around the lower pivot point 114 exerted by the sliding counterweight 122-2 positioned at the same distance away from the lower pivot point 114.

The sliding counterweights 122 may provide particular advantages. A particular advantage may include providing micro-adjustments to the pull force applied by the system 100 during testing of the flight mass. The micro-adjustments enable fine tuning to the weight of the lower level counterweight system, rather than adjusting counterweight 118. The fine tuning allows system 100 to be configured during testing to compensate for errors between the theoretical calculations of the deployment drawing and the system 100 in operation. The fine-tuning of the system 100 during testing allows adjustments without removal of flight mass 102 to reduce risk of damage to flight mass 102.

In some embodiments, the lower level 106 may include a beam angle limiting mechanism (not shown). The beam angle limiting mechanism is positioned at the lower pivot point 114 and configured to limit the maximum angle of the beam 110. The configuration of the beam 110 as shown in Figure 1 is a theoretical horizontal position. In a typical deployment test of flight mass 102, flight mass 102 is close to the ground and configured to deploy in a vertical upwards direction such that the beam 110 is not configured at the horizontal position. During operation of the system 100 (i.e., as flight mass 102 is deploying), the beam 110 is configured to pivot (tilt) at pivot point 114 following direction 131 until the beam 110 reaches one of two maximum angle limits relative to the horizontal position. The beam angle limiting mechanism prevents the beam 110 from tilting beyond the maximum angle limits.

In an embodiment, the beam angle limiting mechanism includes one or more limiting pins that sit below the beam 110 and prevent movement past a certain angle relative to the horizontal position. The limiting pins may be adjustable in position to increase or decrease the allowable angle (e.g., by having multiple holes through which the pins may be inserted for certain angles). In other embodiments, other beam angle limiting mechanisms may be used.

Referring now to the upper level 108 of the system 100, the upper level 108 is configured to balance the lower level 106 of the system 100 (including the flight mass 102 and the lower level counterweight system), a primary counterweight 134, and a sliding counterweight 142, such that the collective center of gravity of all masses applying a force on upper beam 112 is at upper pivot point 116.

The upper level 108 is connected to lower level 106 by an interlevel sling 152 such that the lower level 106 (including the attached flight mass 102) hangs freely below upper beam 112.

The interlevel sling 152 may be a wire rope sling. The wire rope sling 152 is used to transfer the pull force applied by the upper level 108 to the lower level 106 and the flight mass 102. The wire rope sling 152 is attached to the beam 112 such that the wire rope sling can pivot relative to the beam 112.

The upper level 108 includes an upper level counterweight system. The upper level counterweight system is configured to position the center of gravity of the masses applying a force on upper beam 112 at upper pivot point 116.

The counterweight system includes primary counterweight 134, flex counterweight system 136 (also referred to herein as deflection compensation system or feature), and sliding counterweight 142. In some embodiments the sliding counterweight 142 may not be used.

The primary counterweight 134 is coupled to the upper beam 112 at or near a first end 138 of the lower beam that is opposite a second end 140 at or near the point at which wire rope sling 152 attaches to the upper beam 112. Primary counterweight 134 may be structurally and functionally similar to primary counterweight 118.

The distance between pivot point 116 and primary counterweight 134 may be selected such that distance is minimized. The moment of inertia around pivot point 116 depends on the square of the distance between pivot point 116 and the primary counterweight 134, and the weight of primary counterweight 134. Thus, the distance has more impact than the weight. The distance between pivot point 116 and primary counterweight 134 is chosen such that the distance is minimized to reduce the resistance force of experienced by the flight mass 102.

The flex counterweight system 136 may be positioned nearly at the primary counterweight 134 to minimize resistance forces induced during operation of system 100.

The flex counterweight system 136 is coupled to the upper beam 112 at the upper level pivot point 116.

The flex counterweight system 136 is used to compensate for flex in the beam 112 that may be induced by forces as a result of lower level 106 (including the flight mass 102) and primary counterweight 134.

The flex in the beam 112 could otherwise cause the center of gravity to shift from the upper pivot point 116 (i.e., center of gravity would be lower than the pivot point 116).

The flex counterweight system 136 is configured to pull the center of gravity of the flex in the beam 112 to the upper pivot point 116, thereby compensating for beam flex. The flex in the beam 112 may change according to the angle of beam 112. Where the angle of beam 112 is such that beam 112 is parallel to the ground, the flex in the beam 112 is maximum. The flex in the beam 112 varies such that the flex decreases as the angle of the beam 110 increases or decreases. The material properties of the beam 112 may be selected such that the flex in the upper beam 112 may be much lower than the flex in the lower beam 110.

The flex counterweight system 136 may be structurally and functionally similar to the flex counterweight system 120. The flex counterweight system 136 includes one or more weight elements 144 (e.g., weight plates). In an embodiment, where the selected material properties of the beam 112 result in nearly no flex in the upper beam 112, the flex counterweight system 136 may include no weight elements 144. The flex counterweight system moves in direction 146 as the angle of the beam 112 changes.

The sliding counterweight 142 is coupled to beam 112. The sliding counterweight 142 is positioned on the beam 112 between the point at which the wire rope sling 152 connects to the upper beam 112 and the pivot point 116. The sliding counterweight 142 may be structurally and functionally similar to the sliding counterweights 122-1 and 122-2. The amount of the upper level counterweight system may be adjusted by adjusting the position of the sliding counterweight 142.

In some embodiments, the upper level 108 may include a beam angle limiting mechanism (not shown). The beam angle limiting mechanism of upper level 108 may be structurally and functionally similar to the beam angle limiting mechanism of lower level 106. The beam angle limiting mechanism of upper level 108 is positioned at the pivot point 116 and configured to limit the maximum angle of the upper beam 112. In an embodiment, the limiting mechanism includes one or more limiting pins that sit below the beam 112 and prevent movement past a certain angle. The limiting pins may be adjustable in position to increase or decrease the allowable angle (e.g., by having multiple holes through which the pins may be inserted for certain angles). In other embodiments, other types of beam angle limiting mechanisms the serve the same purpose may be used.

The system 100 further includes a crane 150. The crane 150 is connected to the system 100 by a crane sling 148 such that the system 100 hangs freely below the lifting point of crane 150. The crane 150 is used to suspend the system 100 in the air to enable free movement in 3-dimensional space of the flight mass 102.

In an embodiment, to configure system 100 for use, the configuration of system 100 is first determined by theoretical calculations involving, for example, numerical methods carried out by an Excel spreadsheet. The theoretical calculations determine the theoretical configuration of system 100. The theoretical configuration of system 100 includes a distance between primary counterweight 134 and the upper pivot point 116, a distance between the upper pivot point 116 and attachment point of wire rope sling 152 on the upper beam 112, and the weight of primary counterweight 134. The theoretical configuration further includes a distance between primary counterweight 118 and lower pivot point 114, a distance between lower pivot point 114 and the attachment point of lifting sling 105 on the lower beam 110, and the weight of primary counterweight 118. The lower level 106 is configured according to the theoretical configuration and attached with a weight equivalent to the flight mass 102 at pickup point 104. The lower level 106 is lifted by the crane 150 at flex counterweight system 120 to the test balance of the lower beam 110. The balance of lower beam 110 is adjusted by adjusting flex weight elements 130 and sliding counterweights 122. The upper level 108 is configured according to the theoretical configuration and attached to the lower level 106 by the wire rope sling 152. The upper level 108 and lower level 106 are lifted by the crane 150 by the crane sling 148. The balance of upper beam 112 and lower beam 110 is adjusted by adjusting flex weight elements 130 and 144 and sliding counterweights 122 and 142, respectively. The balanced configuration is retained by attaching a retaining device between lower level 106 and upper level 108. The weight equivalent to the flight mass 102 is removed from the pickup point 104. The flight mass is attached to pickup point 104. The balanced configuration may be adjusted by adjusting flex weight elements 130, 144 and sliding counterweights 122, 142.

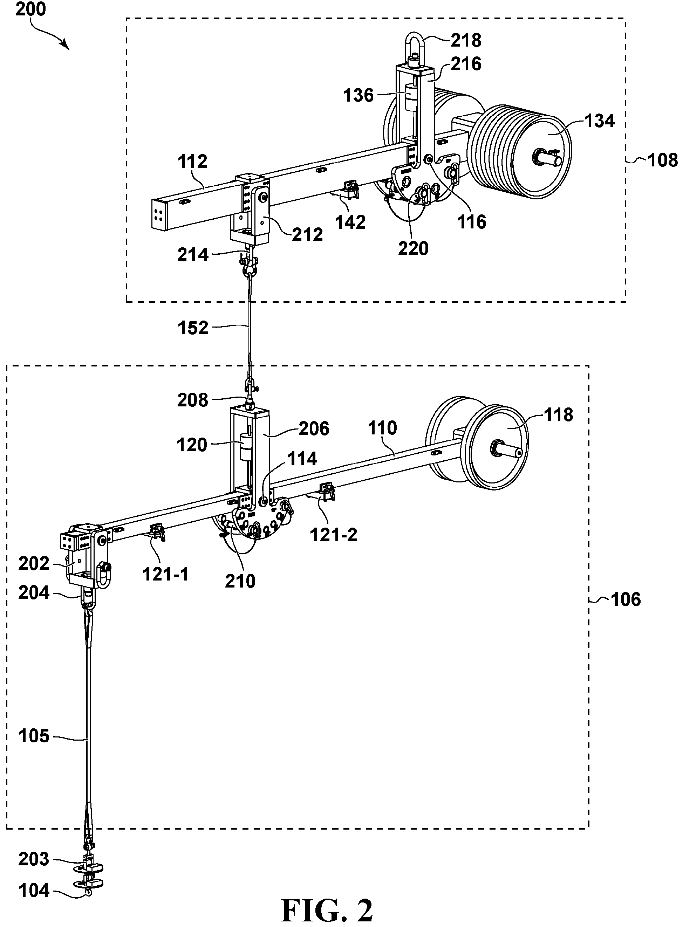

Referring now to Figure 2, shown therein is a gravity offloader system 200, according to an embodiment.

The gravity offloader system 200 is an example embodiment of the gravity offloader system 100 of Figure 1. Components in system 200 of Figure 2 with counterpart components in Figure 1 performing the same or similar function have been given the same name. Certain structural and functional characteristics of counterpart components may not be repeated in the description of Figure 2.

The system 200 includes a bottom offloader subsystem 106 and a top offloader subsystem 108. The bottom offloader subsystem 106 is lower level 106 of Figure 1, and the top offloader subsystem 108 is upper level 108 of Figure 1.

The bottom offloader subsystem 106 includes a lower beam 110. Lower beam 110 is rectangular. Lower beam 110 has a first end and a second end. The first and second ends are opposite to one another along a long axis of the beam. The first end is the pickup end (i.e., the end at which the flight mass will be picked up). Lower beam 110 also includes a top side, bottom side, front side, and back side. Lower beam 110 may be composed of aluminum alloy. The material of which the Lower beam 110 is composed may be prone to flexing under certain conditions (e.g., under certain configurations or positions of the gravity offloader system 100). The lower beam 110 attaches the bottom small bridge 202, bottom large bridge 206, and primary counterweight 118 such that primary counterweight 118 can offset the weight of the flight mass 102 of Figure 1 at lower pivot point 114 when bottom offloader subsystem 106 is lifted at the bottom large bridge 206.

Bottom offloader subsystem 106 includes a bottom small bridge 202. The bottom small bridge 202 is coupled to the lower beam 110 at or near the first end. The bottom small bridge 202 is coupled to the lower beam 110 such that the bottom small bridge 202 hangs below the beam (i.e., extends below the bottom side of the beam). The bottom small bridge 202 is pivotably coupled to the lower beam 110 with bearings such that friction forces induced while pivoting are minimized. The bottom small bridge 202 may be coupled to the lower beam 110 by, as an example, a threaded fastener.

The bottom small bridge 202 is a bracket-like structure or component. The bracket includes two arms and a bridge base plate. The arms are attached to the front and back sides of the lower beam 110. The bridge base plate is connected to the two arms. The bottom small bridge 202 further includes a bottom small bridge hoist ring 204 connected to and extending from the bridge base plate. The hoist ring 204 and the bridge base plate connect via a thrust bearing. The hoist ring 204 and the bridge base plate pivot around the axis of lifting sling 105.The bottom small bridge 202 is at the point on lower beam 110 where the forces of the flight mass 102 are induced on the bottom offloader subsystem 106. The bottom small bridge 202 pivots relative to lower beam 110 such that the flight mass 102 hangs vertically below the attachment point on lower beam 110 while in operation of the system 100.

Bottom offloader subsystem 106 further includes lifting sling 105. Lifting sling 105 has a first end and a second end, the first and second ends are opposite to one another along the length of the sling. The first end is configured to attach to the hoist ring 204. The second end is configured to connect to the flight mass 102 being lifted by system 100. In an embodiment, the lifting sling 105 comprises a loop at each end with a shackle (or another similar method) to connect lifting sling 105 to the hoist ring 202. The lifting sling may be, for example, a steel wire rope, a nylon sling, a polyester sling, or any other certified sling for lifting. The lifting sling 105 may be a length determined by the total height of the system 100. The length of the lifting sling 105 should be long enough not to interfere with the flight mass 102 during operation of the system 100. The lifting sling 105 connects bottom offloader subsystem 106 with the flight mass 102 such that the flight mass 102 hangs freely from bottom offloader subsystem 106.

Bottom offloader subsystem 106 further includes pickup point 104 and load cell 203. The load cell 203 is attached to the second end of lifting sling 105 at a first side of the load cell 203. Pickup point 104 is attached to the load cell 203 at a second side of the load cell 203. Pickup point 103 is configured to couple with the flight mass 102 being picked up by the system 100. During operation of the system 100, the load cell 203 is configured to monitor that the lifting force applied to the flight mass 102 is constant and does not exceed predictions.

Bottom offloader subsystem 106 further includes adjustable primary counterweight 118.

The primary counterweight 118 is attached to the lower beam 110 at or near the second end of the lower beam 110.

Primary counterweight 118 is positioned such that the centre of gravity of bottom offloader subsystem 106 is at the lower pivot point 114.

In an embodiment, primary counterweight 118 comprises a weight sleeve threaded through the lower beam 110 and positioned substantially perpendicular to the lower beam 110.

In an embodiment, the primary counterweight 118 comprises removable metal plates threaded onto the weight sleeve to adjust the weight of primary counterweight 118. The primary counterweight 118 generates pull forces on the flight mass 102 being picked up by the system 100 to offload the weight of the flight mass 102.

Bottom offloader subsystem 106 further includes bottom large bridge 206 along the lower beam 110. Bottom large bridge 206 pivotally connects to lower beam 110 at some point between the first end and second and of the lower beam. The point at which bottom large bridge 206 connects to lower beam 110 is configured according to a deployment drawing. The deployment drawing determines the position of the bottom large bridge 206 based on the properties of the flight mass 102 being tested under system 100. The position of bottom large bridge 206 may vary from the position of primary counterweight 118 along the beam 110. The distance between bottom large bridge 206 and primary counterweight 118 is selected or configured to optimize weight and inertia of the system 100. Optimizing the weight includes minimizing the weight used on the bottom offloader subsystem 106 by reducing the amount of the counterweight 118, which requires extending the distance between the pivot point 114 and the primary counterweight 118. Optimizing the inertia includes lowering the weight of counterweight 118 and reducing the distance between pivot point 114 and the counterweight 118.

Bottom large bridge 206 comprises a lower pivot point 114. Lower beam 110 is movable at the lower pivot point 114 to adjust the angle of lower beam 110 relative to the ground. The location of the lower pivot point 114 is based on the position of bottom large bridge 206. The location of the lower pivot point 114 enables primary counterweight 118 to counter the weight of the flight mass 102 such that the collective centre of gravity of the bottom offloader subsystem 106 (including the flight mass 102) is at the lower pivot point 114.

The bottom large bridge 206 is a bracket-like structure or component. The bracket includes two arms and a top bridge base plate. The arms are attached to the front and back sides of the lower beam 110. The arms are pivotably connected to the lower beam 110 at the lower pivot point 114.

In an embodiment, the arms (or sides) of the bottom large bridge 206 each have an overall anchor shape with an upper rectangular portion, and a lower rounded portion. The upper rectangular portion extends above the beam and attaches to the top base. The top base is coupled to a bottom large bridge hoist ring 208 for connecting to the top offloader subsystem 108. The bottom large bridge hoist ring 208 includes a thrust bearing connection to minimize friction.

The lower rounded portion extends below the lower beam 110. The lower rounded portion comprises a set of pins and holes as pivot restriction 210. Pivot restriction 210 limits the angle of lower beam 110 relative to the ground at the lower pivot point 114. In an embodiment, pivot restriction 210 restricts the angle of lower beam 110 to a maximum 60 degree angle.

Bottom large bridge 206 further comprises flex counterweight system 120 for beam deflection compensation. Flex counterweight system 120 comprises a base, a rod, and counterweights. The base is coupled to the top side of lower beam 110. The rod has a first end and a second end. The first end of the rod is centrally coupled to the base. The second end of the rod is free, with a clearance between the top end of the second rod and the top base of the bridge 114. The counterweights thread onto the rods and disposably connect to the rod such that the counterweights can slide up and down along the length of the rod. Flex counterweight system 120 is coupled to the top side of lower beam 110 at the lower pivot point 114. Flex counterweight system 120 compensates for physical forces induced due to physical deformation of lower beam 110 under the flight mass 102 and primary counterweight 118. The counterweights of flex counterweight system 136 may be manually adjusted during testing of the flight mass 102.

Bottom offloader subsystem 106 further includes sliding counterweight 121-1 and 121-2. Sliding counterweights 121-1, 121-2 are sliding counterweights 122-1, 122-2, respectively, from Figure 1. Sliding counterweights 121-1, 121-2 may be referred to collectively as sliding counterweights 121 and generically as sliding counterweight 121. In an embodiment, sliding counterweight 121-1 is an amount of weight approximately equal to 1.5 kg and sliding counterweight 121-2 is an amount of weight approximately equal to 3.0 kg. Sliding counterweight 121 is a bracket-like structure or component. The bracket is slidably coupled to the lower beam 110. The bracket attaches to the front side and back side of lower beam 110. Sliding counterweight 121 is secured in position. To adjust sliding counterweight 121, the sliding counterweight 121 can be unsecured to enable sliding of the sliding counterweight 121 along lower beam 110 to a new position, and then secured again at the new position along the length of the lower beam 110. Sliding counterweight 121 is disposed under the bottom side of lower beam 110. The bracket is slidably coupled to the front side and back side of lower beam 110. Sliding counterweight 121-2 is disposed between the bottom large bridge 206 and the primary counterweight 118. Sliding counterweight 121-1 is disposed between the bottom large bridge 206 and the bottom small bridge 202. The sliding counterweight 121 is manually adjusted during configuration of system 100 to enable micro-adjustment of the balance of lower beam 110.

Bottom offloader subsystem 106 is coupled to top offloader subsystem 108 via wire rope sling 152 such that bottom offloader subsystem 106 hangs freely from top offloader subsystem 108.

The top offloader subsystem 108 includes an upper beam 112. Upper beam 112 is rectangular. Upper beam 112 has a first end and a second end. The first and second ends are opposite one another along a long axis of the beam. The first end is the attachment end (i.e., the end at which the bottom offloader subsystem 106 is coupled to the top offloader subsystem 108). The upper beam 112 also includes a top side, bottom side, front side, and back side.

The upper beam 112 may be composed of aluminum alloy. The material of which the upper beam 112 is composed may be prone to flexing under certain conditions (e.g., under certain configurations or positions of the gravity offloader system 100). The upper beam 112 may have the same or different material qualities as lower beam 110.

The upper beam 112 attaches the top small bridge 212, top large bridge 216, and primary counterweight 134 such that primary counterweight 134 can offset the weight of the bottom offloader subsystem 106 with the flight mass 102 at upper pivot point 116 when top offloader subsystem 108 is lifted at the top large bridge 216.

In an embodiment, the upper beam 112 is selected such that upper beam 112 is less flexible under stress than lower beam 110 to reduce the collective moment of inertia of the bottom offloader subsystem 104 and the flight mass 102 on the top offloader subsystem 108. In another embodiment, upper beam 112 is selected such that upper beam 112 has similar material properties as lower beam 110.

Top offloader subsystem 108 includes a top small bridge 212. The top small bridge 212 is coupled to the upper beam 112 at or near the first end. The top small bridge 212 is coupled to the lower beam 110 such that the top small bridge 212 hangs below the beam (i.e., extends below the bottom side of the beam). The top small bridge 212 is pivotably coupled to the upper beam 112. The top small bridge 212 is pivotably coupled to the upper beam 112 with bearings such that friction forces induced while pivoting are minimized. The top small bridge 212 may be coupled to the upper beam 112 by, as an example, a threaded fastener.

The top small bridge 212 is a bracket-like structure or component. The bracket includes two arms and a bridge base plate. The arms are attached to the front and back sides of the upper beam 112. The bridge base plate is connected to the two arms. The top small bridge 212 further includes a top small bridge hoist ring 214 connected to and extending from the bridge base plate. The top small bridge 212 is at the point on upper beam 112 where the forces of the flight mass 102 and bottom offloader subsystem 106 are induced on the top offloader subsystem 108. The top small bridge 212 pivots relative to upper beam 112 such that the collective flight mass 102 and bottom offloader subsystem 106 hang vertically below the attachment point on upper beam 112 while in operation of the system 100.

Top offloader subsystem 108 further includes wire rope sling 152. Bottom offloader subsystem 106 is coupled to top offloader subsystem 108 via wire rope sling 152 such that the bottom offloader subsystem 106 hangs freely from top offloader subsystem 108.

Wire rope sling 152 has a first end and a second end, the first and second ends are opposite to one another along the length of the sling. The first end is configured to attach to the top small bridge hoist ring 214. The second end is configured to attach to the bottom large bridge hoist ring 208. In an embodiment, the wire rope sling 152 comprises a loop at each end with a shackle (or another similar mechanism) to connect wire rope sling 152 to a hoist ring. The wire rope sling 152 may be, for example, a steel wire rope. The wire rope sling 152 may be a length of approximately 2 feet. The wire rope sling 152 connects top offloader subsystem 108 with bottom offloader subsystem 106 such that bottom offloader subsystem 106 hangs freely from top offloader subsystem 108.

Top offloader subsystem 108 further includes primary counterweight 134. The primary counterweight 134 is attached to the upper beam 112 at or near the second end of the upper beam 112. Primary counterweight 134 is positioned such that the centre of gravity of top offloader subsystem 108 is at upper pivot point 116.

In an embodiment, primary counterweight 134 comprises a weight sleeve threaded through the upper beam 112 and positioned substantially perpendicular to the upper beam 112. In an embodiment, the primary counterweight 134 comprises removable metal plates threaded onto the weight sleeve to adjust the weight of primary counterweight 134.

The primary counterweight 134 generates pull forces on collective mass of the bottom offloader subsystem 106 and the flight mass 102 being picked up by the system 100 to offload the collective weight of the bottom offloader subsystem 106 and the flight mass 102.

Top offloader subsystem 108 further includes top large bridge 216 along the upper beam 112. Top large bridge 216 pivotally connects to upper beam 112 at some point between the first end and second and of the upper beam 112. The point at which top large bridge 216 connects to upper beam 112 is configured according to a deployment drawing. The deployment drawing determines the position of the top large bridge 216 based on the properties of the flight mass 102 being testing under system 100. The position of top large bridge 216 is determined and may vary along the upper beam 112 from the position of primary counterweight 134 in a manner similar to the position of bottom large bridge 206 as described above. Top large bridge 216 may be positioned at a point closest to primary counterweight 134 such that resistance forces induced by movement of the system 100 are minimized.

Top large bridge 216 comprises an upper pivot point 116. Upper beam 112 is movable at upper pivot point 116 to adjust the angle of upper beam 112 relative to the ground. The location of upper pivot point 116 is based on the position of top large bridge 216. The upper pivot point 116 enables primary counterweight 134 to counter the collective weight of the bottom offloader subsystem 106 and flight mass 102 such that the centre of gravity of the collective weight is at upper pivot point 116.

The top large bridge 216 is a bracket-like structure or component. The bracket includes two arms and a top base. The arms are attached to the front and back sides of the upper beam 112. The arms are pivotably connected to the upper beam 112 at upper pivot point 116.

In an embodiment, the arms (or sides) of the top large bridge 216 each have an overall anchor shape with an upper rectangular portion and a lower rounded portion. The upper rectangular portion extends above the beam and attaches to the top base. The top base is coupled to a top large bridge hoist ring 218 for connecting the crane 150 of Figure 1. In an embodiment, the hoist ring 218 has a larger weight capacity than other hoist rings of the system 100 such that hoist ring 218 may support the weight of the entire system 100.

The lower rounded portion extends below the upper beam 112. The lower rounded portion comprises a set of pins and holes as pivot restriction mechanism 220. Pivot restriction 220 limits the angle of upper beam 112 relative to the ground at upper pivot point 116. In an embodiment, pivot restriction 220 restricts the angle of upper beam 112 to 38 degrees from the horizontal position.

Top large bridge 216 further comprises flex counterweight system 136 for beam deflection compensation. Flex counterweight system 136 comprises a base, a rod, and one or more counterweights. The base is coupled to the top side of upper beam 112. The rod has a first end and a second end. The first end of the rod is centrally coupled to the base. The second end of the rod is free, with a clearance between the top end of the second rod and the top base of the bridge 134. The counterweights thread onto the rods and disposably connect to the rod such that the counterweights can slide up and down along the length of the rod. Flex counterweight system 136 is coupled to the top side of upper beam 112 at upper pivot point 116.

Flex counterweight system 136 compensates for physical forces induced due to physical deformation of upper beam 112 under the weight of the flight mass 102 and bottom offloader subsystem 106, and primary counterweight 118. The counterweights of flex counterweight system 136 may be manually adjusted during testing of the flight mass 102. In an embodiment, the counterweights of flex counterweight system 136 may be lower is mass compared to the counterweights of flex counterweight system 112. In another embodiment, flex counterweight system 136 may not include the counterweights.

Top offloader subsystem 108 further includes sliding counterweight 142. In an embodiment, sliding counterweight 142 is an amount of weight approximately equal to 3.5 kg. Sliding counterweight 142 is a bracket-like structure or component. The bracket is slidably coupled to the upper beam 112. The bracket attaches to the front side and back side of upper beam 112. Sliding counterweight 142 is secured in position. To adjust sliding counterweight 142, the sliding counterweight 142 can be unsecured to enable sliding of the sliding counterweight 142 along upper beam 112 to a new position, and then secured again at the new position along the length of the upper beam 112. Sliding counterweight 142 is disposed under the bottom side of upper beam 112. The bracket is slidably coupled to the front side and back side of upper beam 112. Sliding counterweight 142 is disposed between the top large bridge 216 and the top small bridge 212. The sliding counterweight 142 is manually adjusted during operation of system 100 to enable micro-adjustment of the balance of upper beam 112.

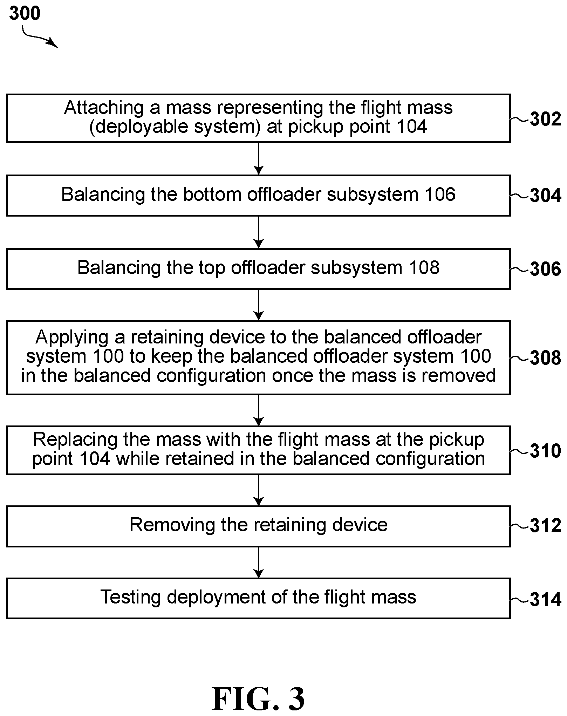

Referring now to Figure 3, shown therein is a method 300 of using the gravity offloader system 100 of Figure 1, according to an embodiment.

At 302, the method 300 includes attaching a mass representing the flight mass 102 at pickup point 104.

At 304, the method 200 includes balancing the bottom offloader subsystem 106. Balancing the bottom offloader subsystem 106 may include removing pins at pivot restriction 210, attaching the mass representing the flight mass 102 at pickup point 104, lifting the bottom offloader subsystem 106 with the crane 150 at the bottom large bridge hoist ring 208, and balancing the lower beam 110 by adjusting the primary counterweight 118 and the sliding counterweights 121.

Balancing the bottom offloader subsystem 106 further comprises adjusting the weight of flex counterweight system 120 and tilting the lower beam 110. Where if the lower beam 110, when tilted, tends to return to the horizontal position, the weight elements 130 of the flex counterweight system 120 are adjusted to move further from the beam 110. Where if the lower beam 110, when tilted, tends to go more vertically the weight elements 130 of the flex counterweight system 120 are adjusted to move closer to the beam 110.

Balancing the bottom offloader subsystem 106 further comprises replacing pins at pivot restriction 210 and facing the lower beam 110 on the ground.

At 306, the method 300 includes balancing the top offloader subsystem 108.

Balancing the top offloader subsystem 108 comprises inserting a pin at pivot restriction 220 at a 0 degree position relative to the horizontal, lifting the subsystem 108 with the crane 150 at the top large bridge hoist ring 218, and attaching wire rope sling 152 to the top small bridge hoist ring 214 and the bottom large bridge hoist ring 208, so as to collectively raise top offloader subsystem 108 and bottom offloader subsystem 106.

Balancing the top offloader subsystem 108 further comprises removing the pin at pivot restriction 220, and balancing the upper beam 112 by adjusting the primary counterweight 134 and the sliding counterweight 142.

Balancing the top offloader subsystem 108 further comprises inserting the pin at pivot restriction 220, placing top offloader subsystem 108 and bottom offloader subsystem 106 collectively on the ground, and de-attaching the mass at pickup point 104.

At 308, the method 300 includes applying a retaining device to the balanced offloader system 100 from 306.

The retaining device is configured to keep the balanced offloader system 100 from 306 in the balanced configuration once the mass is removed from the pickup point 104.

In an embodiment, the retaining device comprises a first sling and a second sling. The first and second sling may be composed of, as examples, nylon or polyester. The first sling may be a length of 4 feet, and the second sling may be a length of 5 feet. The first sling comprises an end loop at each end of the first sling. The end loops attach to the primary counterweight 118. The second sling comprises a first end and second end. The first end of the second sling attaches to a shackle at top small bridge hoist ring 214. The second end of the second sling attaches by passing the first sling into an end loop of the second end of the second sling.

Applying the retaining device to the balanced offloader system 100 further includes coupling the crane 150 at the top large bridge hoist ring 218 to collectively raise top offloader subsystem 108 and bottom offloader subsystem 106.

Applying the retaining device to the balanced offloader system 100 further includes hooking the offloader system 100 to the lifting point at pickup point 104, collectively lifting the subsystems 106 and 108 until lower beam 110 and upper beam 112 are horizontal, and removing the first sling and unhooking the second sling, to retain system 100 in a balanced configuration.

At 310, the method 300 includes replacing the mass with the flight mass 102 at the pickup point 104 while retained in the balanced configuration.

At 312, the method 300 includes removing the retaining device.

At 314, the method 300 includes testing deployment of the flight mass 102 when attached to the gravity offloader system.

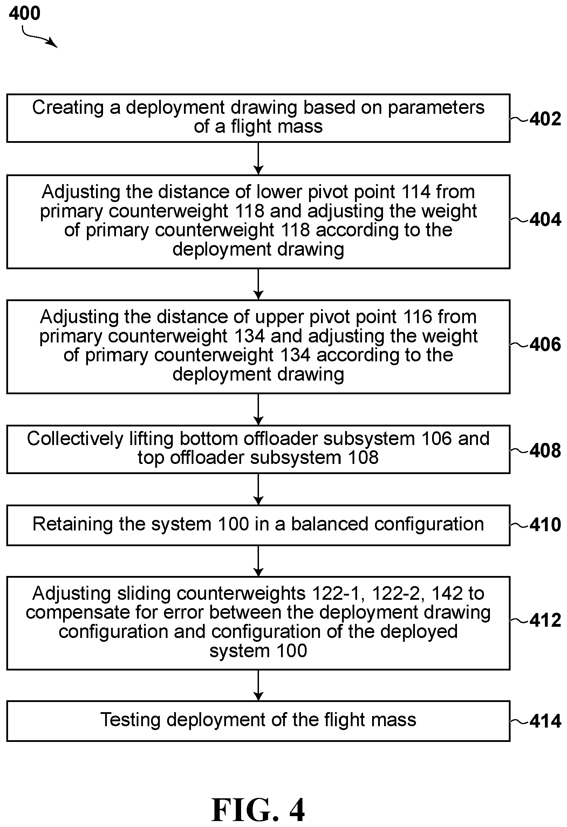

Referring now to Figure 4, shown therein is a method 300 of using the gravity offloader system 100 of Figure 1, according to an embodiment.

At 402, the method 400 includes creating a deployment drawing based on parameters of a flight mass, such as the flight mass 102 of Figure 1.

At 404, the method 400 includes adjusting the distance of lower pivot point 114 from primary counterweight 118 and adjusting the weight of primary counterweight 118 according to the deployment drawing.

At 406, the method 400 includes adjusting the distance of upper pivot point 116 from primary counterweight 134 and adjusting the weight of primary counterweight 134 according to the deployment drawing.

At 408, the method 400 includes collectively lifting bottom offloader subsystem 106 and top offloader subsystem 108.

At 410, the method 400 includes retaining the system 100 in a balanced configuration.

At 412, the method 400 includes adjusting sliding counterweights 122, 124, 142 to compensate for error between the deployment drawing configuration and configuration of the deployed system 100.

At 414, the method 400 includes testing deployment of the flight mass.

While the above description provides examples of one or more apparatus, methods, or systems, it will be appreciated that other apparatus, methods, or systems may be within the scope of the claims as interpreted by one of skill in the art.

## Claims

1. A gravity offloader system for ground testing deployable space equipment, comprising:
an upper beam and a lower beam;
an interlevel bridge comprising a first end and a second end for hanging the lower beam from the upper beam, the first end connecting to the lower beam at a lower level pivot point, the second end coupling to the upper beam, wherein the first end and the second end are connected by an interlevel sling;
a lifting sling for hanging a flight mass being tested from the lower beam;
a crane bridge for hanging the upper beam from a crane configured to lift the upper beam, the lower beam, and the flight mass, the crane bridge connecting to the upper beam at an upper level pivot point, wherein the crane bridge and the crane are connected by a crane sling;
an upper beam primary counterweight coupled to the upper beam on a first side of the upper level pivot point that is opposite a second side of the upper level pivot point on which interlevel bridge is coupled;
a lower beam primary counterweight coupled to the lower beam on a first side of the lower level pivot point that is opposite a second side of the lower level pivot point on which the lifting sling is coupled;
a lower beam flex counterweight system coupled to the lower beam at the lower level pivot point; and
an upper beam flex counterweight system coupled to upper beam at the upper level pivot point.

2. The system of claim 1, further comprising at least one sliding counterweight coupled to the lower beam and configured to slide along the lower beam to increase or decrease distance from the lower level pivot point.

3. The system of claim 1, further comprising at least one sliding counterweight coupled to the upper beam and configured to slide along the upper beam to increase or decrease distance from the upper level pivot point.

4. The system of claim 1, further comprising a beam angle limiting mechanism at the lower level pivot point or the upper level pivot point to limit movement of the lower beam or the upper beam.

5. The system of claim 1, further comprising a load cell coupled at a first end to the lifting sling and coupled at a second end to a pickup point for attaching the flight mass.

6. A method of using the gravity offloader system of claim 1, the method comprising:
attaching a mass equal to the flight mass to the pickup point;
balancing the lower beam using the lower beam primary counterweight and the lower beam flex counterweight system while the mass is attached;
connecting the upper beam to the balanced lower beam using the interlevel bridge;
balancing the upper beam primary counterweight and the upper beam flex counterweight system while the upper beam is connected to the balanced lower beam;
applying a retaining device to the balanced upper and lower beams to keep the balanced upper and lower beams in a balanced configuration when the mass is removed;
replacing the mass with the flight mass at the pickup point;
removing the retaining device; and
testing deployment of the flight mass.

7. The method of claim 6, wherein the gravity offloader system further comprises at least one sliding counterweight coupled to the lower beam or the upper beam, and wherein the method further comprises adjusting a position of the at least one sliding counterweight along the lower beam or upper beam while the flight mass is attached to balance the gravity offloader system.

8. The method of claim 6, wherein balancing the lower beam includes moving a weight of the lower beam flex counterweight system closer to the lower beam or further away from the lower beam to move a center of gravity of the lower beam closer to the lower level pivot point.

9. The method of claim 6, wherein balancing the upper beam includes moving a weight of the upper beam flex counterweight system closer to the upper beam or further away from the upper beam to move a center of gravity of the upper beam closer to the upper level pivot point.

10. The method of claim 6, further comprising monitoring a lifting force applied to the flight mass using a load cell, wherein the load cell is coupled at a first end to the lifting sling and coupled at a second end to a pickup point for attaching the flight mass.

11. The method of claim 6, wherein balancing the lower beam comprises removing pins at a lower beam angle limiting mechanism, attaching a mass representing the flight mass at the pickup point, and lifting the lower beam while the mass is attached.

12. The method of claim 11, wherein balancing the lower beam further comprises inserting the pins at the lower beam angle limiting mechanism and facing the lower beam at the horizontal position.

13. The method of claim 12, wherein balancing the upper beam comprises inserting pins at an upper beam angle limiting mechanism at a 0 degree angle relative to a horizontal position, lifting the upper beam with the crane, and connecting the lower beam to the upper beam.

14. The method of claim 6, wherein balancing the lower beam includes moving the weight of the lower beam flex counterweight system away from the lower beam if the lower beam moves towards a horizontal position, and wherein balancing the lower beam includes moving the weight of the lower beam flex counterweight system closer to the lower beam if the lower beam moves towards a vertical position.

15. The method of claim 6, wherein balancing the upper beam includes moving the weight of the upper beam flex counterweight system away from the upper beam if the upper beam moves towards a horizontal position, and wherein balancing the upper beam further includes moving the weight of the upper beam flex counterweight system closer to the upper beam if the upper beam moves towards a vertical position.
